# EUROPÄISCHE PATENTSCHRIFT

(11) **EP 4 141 847 B1**
(45) Veröffentlichungstag und Bekanntmachung des Hinweises auf die Patenterteilung: **01.04.2026**
(21) Anmeldenummer: 22185999.4
(22) Anmeldetag: 20.07.2022
(51) Int. Cl.: G09F 3/20, G06Q 10/20, G09F 3/00

(54) **VERFAHREN ZUR KENNZEICHNUNG VON BAUTEILEN**
METHOD FOR MARKING COMPONENTS
PROCÉDÉ D'ÉTIQUETAGE DES COMPOSANTS

(30) Priorität: 26.08.2021 DE 102021122087
(43) Veröffentlichungstag der Anmeldung: 01.03.2023
(73) Patentinhaber: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- EP-B1- 2 272 127
- US-A1- 2014 312 112
- US-A1- 2015 294 130

## Beschreibung

Die Erfindung betrifft ein Verfahren zur Kennzeichnung von Bauteilen, insbesondere von elektrischen Leitungen.

Elektrische Bauteile wie beispielsweise Kabel an Schaltschränken werden üblicherweise durch die Anbringung von Kennzeichnungsschildern gekennzeichnet. Dabei wird an jedem Kabel ein Kennzeichnungsschild befestigt, beispielsweise mittels eines geeigneten Halters wie insbesondere einer Tülle. Jedes Kennzeichnungsschild wird auf einer Beschriftungsfläche mit einer Beschriftung versehen, die das betreffende Kabel kennzeichnet. Die Kennzeichnungsschilder werden dabei meist am Einsatzort vor ihrer Anbringung am Kabel mittels eines geeigneten Beschriftungsgeräts beschriftet. Zu diesem Zweck muss der Endanwender stets ein geeignetes Beschriftungsgerät bereithalten. Die US 2014/312112 A1 lehrt das Anbringen von Barcodes auf einem Bauteil. Mittels eines Barcodelesers wird der Barcode gescannt und mit elektronisch gespeicherten Dokumenten verbunden. Die EP 2 272 127 B1 lehrt die Kennzeichnung von Kabeln vor deren Installation.

Es ist daher Aufgabe der Erfindung, ein Verfahren zur Kennzeichnung von Bauteilen zur Verfügung zu stellen, das einfacher zu handhaben ist.

Diese Aufgabe wird erfindungsgemäß durch ein Verfahren mit den Merkmalen des Anspruchs 1 gelöst. Vorteilhafte Weiterbildungen der Erfindung sind Gegenstand der abhängigen Ansprüche.

Der Erfindung liegt ein ganz anderer Ansatz zugrunde als beim oben beschriebenen Stand der Technik. Die Kennzeichnungsschilder können bereits beim Hersteller beschriftet werden, wobei die Codes zweckmäßig jeweils eine Abfolge von Zeichen, insbesondere von Buchstaben und/oder Zahlen, aufweisen. Auch Sonderzeichen, insbesondere solche, die auf einer Computer-Tastatur enthalten sind, können verwendet werden. Jedes Kennzeichnungsschild enthält dabei eine andere Abfolge von Zeichen. Werden nur Buchstaben und Ziffern herangezogen, so können mit einer siebenstelligen Beschriftung bereits mehr als 78 Milliarden Kennzeichnungsschilder, genau 78.364.164.096, mit unterschiedlichen Codes beschriftet werden. Diese Zahl erhöht sich noch, wenn beispielsweise auch Sonderzeichen zusätzlich herangezogen werden und/oder die Buchstaben auch nach Groß- und Kleinschreibung unterschieden werden. Die Kennzeichnungsschilder werden bedruckt ausgeliefert und erst beim Endanwender den zu kennzeichnenden Bauteilen zugeordnet. Mittels eines Lesegeräts werden die Codes ausgelesen, und es wird jedem Code eine Information betreffend das mittels des den Code tragenden Kennzeichnungsschilds zu kennzeichnende Bauteil zugeordnet. In einer Datenbank wird jeder der Codes mit der ihm zugeordneten Information gespeichert. So wird zum Beispiel dem Code mp4f&04 die Information zugeordnet, dass das mit ihm bedruckte Kennzeichnungsschild ein Stromversorgungskabel bezeichnet, welches zu einer bestimmten Bearbeitungsmaschine in der Werkhalle führt. Ein visuell lesbarer Code, der insbesondere aus Buchstaben und/oder Zahlen und/oder Sonderzeichen besteht, ermöglicht es einem Anwender, den Code auch ohne Lesegerät abzulesen und die zugehörige Information manuell abzufragen.

Gemäß einer vorteilhaften Weiterbildung der Erfindung enthält jede einem der Codes zugeordnete Information mindestens zwei Teilinformationen. Mindestens eine erste Teilinformation erfordert dabei bei einem Auslesen aus der Datenbank eine andere Zugriffsberechtigung als mindestens eine zweite Teilinformation. So kann beispielsweise eine einem Code zugeordnete Teilinformation Daten enthalten, die einem anderen Benutzerkreis zugänglich sind als eine zweite dem Code zugeordnete Teilinformation. So kann die erste Teilinformation wie oben ausgeführt aussagen, dass das mit dem zugeordneten Code beschriftete Kennzeichnungsschild das Stromversorgungskabel bezeichnet, das zu einer bestimmten Maschine in der Werkhalle führt. Die zweite Teilinformation kann dann detaillierte Informationen über die Maschine enthalten, die nicht jedem Anwender zugänglich sein sollen. So können verschiedene Anwender unterschiedliche Lesegeräte bzw. Lesegeräte mit unterschiedlicher Lesesoftware haben, welche in der Lage sind, aus der Datenbank unterschiedliche Teilinformationen zu jedem eingelesenen Code auszulesen.

Zusätzlich zur Abfolge von Zeichen kann jedes Kennzeichnungsschild mit einem weiteren Code bedruckt werden, wobei jeder weitere Code maschinenlesbar ist und insbesondere ein Strichcode oder ein QR-Code ist, wobei jeder der weiteren Codes in der Datenbank zusammen mit dem Code, mit dem das betreffende Kennzeichnungsschild bedruckt ist, und der zugeordneten Information gespeichert wird. Dies erleichtert ein maschinelles Lesen der auf dem Kennzeichnungsschild aufgedruckten Kennzeichnung.

Desweiteren ist es möglich, dass jedes Kennzeichnungsschild mit einer visuell erkennbaren Bildinformation oder mehreren visuell erkennbaren Bildinformationen bedruckt wird. Insbesondere kann es mit einem Logo, beispielsweise einem Firmenlogo, bedruckt werden, beispielsweise dem Firmenlogo des Herstellers des Kennzeichnungsschilds oder dem Firmenlogo des Anwenders. Werden zwei Logos auf das Kennzeichnungsschild aufgedruckt, so kann das eine Logo das Firmenlogo des Herstellers des Kennzeichnungsschilds sein und das andere Logo das Firmenlogo des Anwenders. Auch die visuell erkennbare(n) Bildinformation(en) bzw. das Logo oder die Logos kann bzw. können Bestandteil des Codes sein. Wenn die Kennzeichnungsschilder jeweils mit dem Logo des Herstellers und dem Logo seines Kunden bedruckt werden, ist es möglich, dass der Hersteller für jeden Kunden allein bei der Verwendung von Buchstaben und Ziffern mehr als 78 Milliarden Kennzeichnungsschilder bereitstellen kann.

Im Folgenden wird die Erfindung anhand eines in der Zeichnung schematisch dargestellten Ausführungsbeispiels näher erläutert. Es zeigen
- Fig. 1: eine Anordnung von Kennzeichnungsschildern und
- Fig. 2: eine schematische Darstellung eines Verfahrens zur Kennzeichnung von Bauteilen.

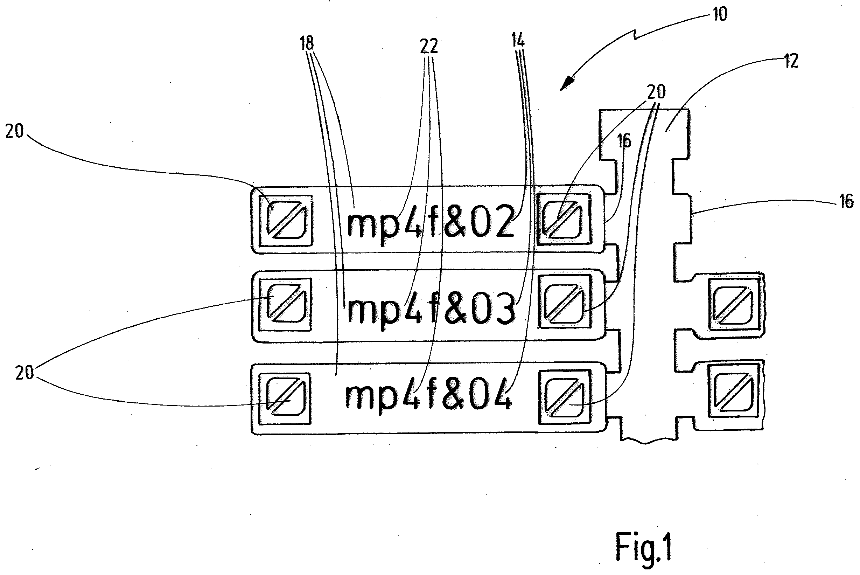

Fig. 1 zeigt eine Teilansicht eines Kennzeichnungsschildersatzes 10, der einen Zentralträger 12 aus Kunststoff aufweist, an dem einstückig mehrere Kennzeichnungsschilder 14 angeformt sind. Jedes der Kennzeichnungsschilder 14 ist an einer Sollbruchstelle 16 vom Zentralträger 12 lösbar. Jedes der Kennzeichnungsschilder 14 weist eine Beschriftungsfläche 18 auf, auf der links und rechts jeweils das Firmenlogo 20 des Herstellers aufgedruckt ist. Zwischen den Firmenlogos 20 ist ein Code 22 bestehend aus sieben Zeichen aufgedruckt, wobei die Zeichen Buchstaben, Ziffern und Sonderzeichen umfassen. Die rechts vom Zentralträger 12 angeordneten Kennzeichnungsschilder sind in Fig. 1 nur angedeutet, und das oberste von ihnen wurde bereits an der Sollbruchstelle 16 entfernt.

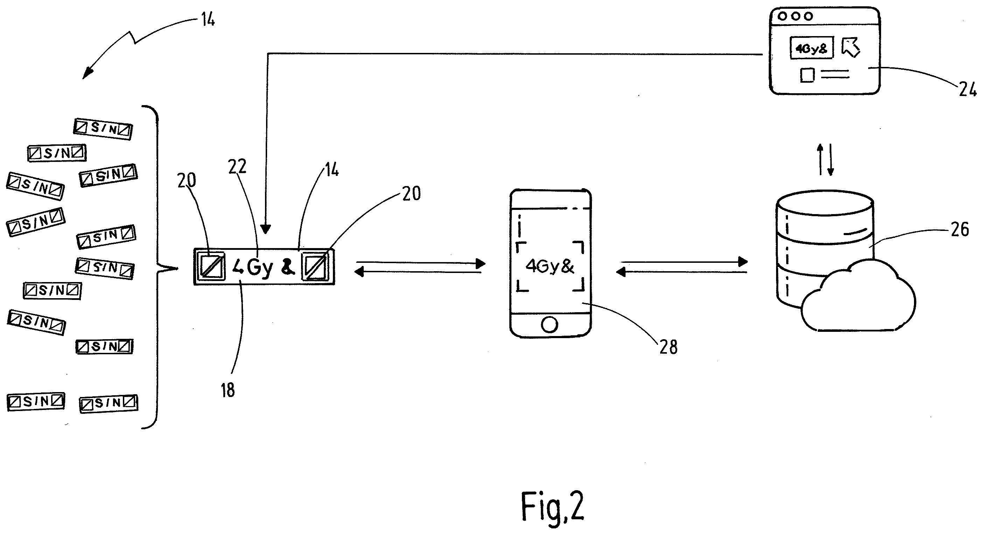

Die Verwendung solcher Kennzeichnungsschilder 14 zur Kennzeichnung von elektrischen Bauteilen wie beispielsweise Kabeln ist in Fig. 2 schematisch dargestellt. Dabei sind die Kennzeichnungsschilder 14 der Anschaulichkeit halber verkleinert dargestellt und tragen auf ihrer Beschriftungsfläche 18 zwischen den beiden Firmenlogos 20 jeweils nur vier Zeichen. Links in Fig. 2 ist schematisch eine Vielzahl von Kennzeichnungsschildern 14 dargestellt, deren Code 22 jeweils durch S/N, die Abkürzung für "Seriennummer", als Platzhalter ersetzt wurde. Beim Hersteller werden die Kennzeichnungsschilder 14 einerseits mit dem Firmenlogo 20, andererseits jeweils mit einem Code 22 bedruckt, wobei jedes Kennzeichnungsschild 14 einen anderen Code 22 erhält. Jedes der Kennzeichnungsschilder 14 ist zur Kennzeichnung eines Bauteils wie beispielsweise eines elektrischen Kabels bestimmt. Wird ein Kennzeichnungsschild 14 an einem Kabel angeordnet, so wird einerseits der Code 22 auf dem Kennzeichnungsschild 14 manuell mittels einer Datenverarbeitungseinrichtung 24 erfasst, und andererseits werden Daten betreffend das gekennzeichnete Kabel manuell mittels der Datenverarbeitungseinrichtung 24 erfasst. Die Daten betreffend das Kabel bilden eine Information über Eigenschaften des Kabels, welche dem erfassten Code 22 zugeordnet wird. Die Information kann dabei in mehrere Teilinformationen aufgeteilt sein. Die von der Datenverarbeitungseinrichtung 24 erfassten Datensätze bestehend aus jeweils einem Code 22 und einer Information betreffend das mit dem mit dem Code 22 beschrifteten Kennzeichnungsschild 14 versehenen Bauteil wird von der Datenverarbeitungseinrichtung 24 in einer Datenbank 26 gespeichert. Aus der Datenbank 26 sind die Datensätze mittels eines geeigneten Auslesegeräts 28 auslesbar, wobei dann, wenn jede Information aus mehreren Teilinformationen besteht, das Auslesegerät 28 eingerichtet sein kann, alle Teilinformationen auszulesen oder aber nur eine oder einen Teil der Teilinformationen.

Zusammenfassend ist folgendes festzuhalten: Die Erfindung betrifft ein Verfahren zur Kennzeichnung von Bauteilen, insbesondere von elektrischen Leitungen, wobei eine Anzahl Kennzeichnungsschilder 14 mit unterschiedlichen Codes 22 bedruckt werden, wobei jedes der Kennzeichnungsschilder 14 einem zu kennzeichnenden Bauteil zugeordnet wird, wobei mittels eines Eingabegeräts die Codes 22 erfasst werden, wobei jedem Code 22 eine Information betreffend das mittels des den Code 22 tragenden Kennzeichnungsschilds 14 zu kennzeichnende Bauteil zugeordnet wird und wobei in einer Datenbank 26 jeder der Codes 22 mit der ihm zugeordneten Information gespeichert wird.

## Patentansprüche

1. Verfahren zur Kennzeichnung von Bauteilen, insbesondere von elektrischen Leitungen, wobei eine Anzahl Kennzeichnungsschilder (14) mit unterschiedlichen Codes (22) bedruckt werden, wobei jedes der Kennzeichnungsschilder (14) einem zu kennzeichnenden Bauteil zugeordnet wird, wobei mittels eines Eingabegeräts die Codes (22) erfasst werden, **dadurch gekennzeichnet, dass** jedem Code (22)
eine Information betreffend das mittels des den Code (22) tragenden Kennzeichnungsschilds (14) zu kennzeichnende Bauteil zugeordnet wird und wobei in einer Datenbank (26) jeder der Codes (22) mit der ihm zugeordneten Information gespeichert wird, und wobei die Codes (22) von einem Benutzer visuell lesbar sind.

2. Verfahren nach Anspruch 1, **dadurch gekennzeichnet, dass** jede einem der Codes (22) zugeordnete Information mindestens zwei Teilinformationen enthält, von denen mindestens eine erste Teilinformation bei einem Auslesen aus der Datenbank (26) eine andere Zugriffsberechtigung erfordert als mindestens eine zweite Teilinformation.

3. Verfahren nach einem der vorangehenden Ansprüche, **dadurch gekennzeichnet, dass** die Codes (22) jeweils eine Abfolge von Zeichen, insbesondere von Buchstaben und/oder Ziffern, aufweisen.

4. Verfahren nach einem der vorangehenden Ansprüche, **dadurch gekennzeichnet, dass** jedes Kennzeichnungsschild (14) mit einem weiteren Code bedruckt wird, wobei jeder weitere Code maschinenlesbar ist und insbesondere ein Strichcode oder ein QR-Code ist, und dass jeder der weiteren Codes in der Datenbank zusammen mit dem Code (22), mit dem das betreffende Kennzeichnungsschild (14) bedruckt ist, und der zugeordneten Information gespeichert wird.

5. Verfahren nach einem der vorangehenden Ansprüche, **dadurch gekennzeichnet, dass** jedes Kennzeichnungsschild (14) mit einer visuell erkennbaren Bildinformation (20) oder mehreren visuell erkennbaren Bildinformationen (20) bedruckt wird.

6. Verfahren nach Anspruch 5, **dadurch gekennzeichnet, dass** die visuell erkennbare Bildinformation (20) bzw. die visuell erkennbaren Bildinformationen (20) Bestandteil des Codes (22) sind.

## Claims

1. Method for identifying components, in particular electrical lines, wherein a number of identification plates (14) are printed with different codes (22), wherein each of the identification plates (14) is assigned to a component to be identified, wherein the codes (22) are captured by means of an input device, **characterized in that** each code (22) is assigned information concerning the component to be identified by means of the identification plate (14) bearing the code (22), and each of the codes (22) is stored with the information assigned to it in a database (26), and the codes (22) are visually readable by a user.

2. Method according to Claim 1, **characterized in that** each item of information assigned to one of the codes (22) contains at least two items of partial information, at least one first item of partial information of which, upon reading from the database (26), requires a different access authorization than at least one second item of partial information.

3. Method according to one of the preceding claims, **characterized in that** the codes (22) each have a sequence of characters, in particular letters and/or numbers.

4. Method according to one of the preceding claims, **characterized in that** each identification plate (14) is printed with a further code, wherein each further code is machine-readable and is in particular a barcode or a QR code, and **in that** each of the further codes is stored in the database together with the code (22), with which the relevant identification plate (14) is printed, and the assigned information.

5. Method according to one of the preceding claims, **characterized in that** each identification plate (14) is printed with visually recognizable image information (20) or multiple items of visually recognizable image information (20).

6. Method according to Claim 5, **characterized in that** the visually recognizable image information (20) or the items of visually recognizable image information (20) is/are part of the code (22).

## Revendications

1. Procédé pour l'identification de composants, en particulier de lignes électriques, dans lequel une pluralité de plaques d'identification (14) sont imprimées avec des codes (22) différents, chacune des plaques d'identification (14) étant associée à un composant à identifier, les codes (22) étant saisis au moyen d'un dispositif d'entrée, **caractérisé en ce qu'**une information concernant le composant à identifier au moyen de la plaque d'identification (14) portant le code (22) est associée à chaque code (22), et chacun des codes (22) étant stocké dans une base de données (26) avec l'information qui lui est associée, et les codes (22) étant lisibles visuellement par un utilisateur.

2. Procédé selon la revendication 1, **caractérisé en ce que** chaque information associée à l'un des codes (22) contient au moins deux informations partielles, parmi lesquelles au moins une première information partielle nécessite, lors d'une lecture à partir de la base de données (26), une autorisation d'accès différente de celle d'au moins une deuxième information partielle.

3. Procédé selon l'une des revendications précédentes, **caractérisé en ce que** les codes (22) comportent respectivement une suite de caractères, en particulier de lettres et/ou de chiffres.

4. Procédé selon l'une quelconque des revendications précédentes, **caractérisé en ce que** chaque plaque d'identification (14) est imprimée avec un code supplémentaire, chaque code supplémentaire étant lisible par machine et étant en particulier un code à barres ou un code QR, et **en ce que** chacun des codes supplémentaires est stocké dans la base de données conjointement avec le code (22) avec lequel la plaque d'identification (14) concernée est imprimée et avec l'information associée.

5. Procédé selon l'une quelconque des revendications précédentes, **caractérisé en ce que** chaque plaque d'identification (14) est imprimée avec une information d'image (20) visuellement reconnaissable ou avec plusieurs informations d'image (20) visuellement reconnaissables.

6. Procédé selon la revendication 5, **caractérisé en ce que** l'information d'image (20) visuellement reconnaissable ou les informations d'image (20) visuellement reconnaissables font partie du code (22).
